# EUROPÄISCHE PATENTANMELDUNG

(11) **EP 2 883 916 A1**
(43) Veröffentlichungstag der Anmeldung: **17.06.2015**
(21) Anmeldenummer: 13005812.6
(22) Anmeldetag: 13.12.2013
(51) Int. Cl.: C09C 1/02

(54) **Oberflächenpassivierte Carbonat-haltige Partikel oder Kompositpartikel und Verfahren zur Herstellung**

(71) Anmelder: KRONOS INTERNATIONAL, INC., 51373 Leverkusen (DE)
(72) Erfinder: Grosser, Ingo, 50823 Köln (DE); Mersch, Frank, 42799 Leichlingen (DE); Wilkenhöner, Uwe, 42107 Wuppertal (DE)

(57) **Zusammenfassung**

Die Erfindung betrifft die Behandlung von Calciumcarbonat- oder Magnesiumcarbonat-haltigen Partikeln mit Flusssäure, Oxalsäure oder deren wasserlöslichen Salze, so dass sich auf der Partikeloberfläche schwerlösliche Fluorid- oder Oxalatverbindungen bilden, die den Partikeln eine chemische Oberflächenstabilität (Passivierung) verleihen.

Die Partikel sind insbesondere geeignet zur Verwendung in Beschichtungen und Kunststoffen.

## Beschreibung

### Gebiet der Erfindung

Die Erfindung betrifft die Behandlung von Calciumcarbonat- oder Magnesiumcarbonathaltigen Partikeln zur Verbesserung der chemischen Oberflächenstabilität (Passivierung).

### Technologischer Hintergrund der Erfindung

Calciumcarbonat ist ein in der Farben- und Lackindustrie wie auch im Baustoffbereich und in Polymoranwendungen, insbesondere PVC, häufig eingesetzter Füllstoff, sowohl in Form des natürlichen Minerals (z.B. Kreide oder Marmor) oder in Form des synthetisch hergestellten Calciumcarbonats (z.B. gefälltes Calciumcarbonat PCC). Desweiteren wird Calciumcarbonat in Farben und anderen Beschichtungssystemen beispielsweise im Gemisch mit Pigmenten wie Titandioxid öder als Kompositpartikel, welche Titandioxid oder andere anorganische Pigmente enthalten, verwendet. Desweiteren werden alternativ oder gegebenenfalls zusätzlich weitere Füllstoffe, insbesondere Magnesiumcarbonat-haltige Systeme wie z.B. Huntit (CaMg₃(CO₃)₄), Magnesit (MgCO₃), Hydromagnesit oder Dolomit (CaMg(CO₃)₂) eingesetzt.
Calciumcarbonat ebenso wie Magnesiumcarbonat haben jedoch die Eigenschaft, sich in leicht alkalischen bis sauren Medien zunehmend stark zu lösen Damit sind die entsprechenden Beschichtungszusammensetzungen oder Baustoffe unter entsprechenden Bedingungen - z.B. bei Regen oder insbesondere bei saurem Regen (pH-Wert < 5,5) - nicht langzeitstabil.
Zur Stabilisierung von Calciumcarbonat-Oberflächen gegenüber Säuren (sogenannte Passivierung) offenbart die EP 0 956 316 B1 eine Behandlung der Partikel mit Phosphorsäure oder Natriumsilikat.

### Aufgabenstellung und Kurzbeschreibung der Erfindung

Der Erfindung liegt die Aufgabe zugrunde, Calciumcarbonat- und Magnesiumcarbonathaltige Partikel oder Kompositpartikel mit einer alternativen Oberflächenpassivierung anzugeben sowie ein Verfahren zur Herstellung.

Die Aufgabe wird gelöst durch Calciumcarbonat- oder Magnesiumcarbonat-haltige Partikel oder Kompositpartikel dadurch gekennzeichnet, dass die Partikel oder Kompositpartikel auf ihrer Oberfläche schwerlösliche Fluorid- oder Oxalatverbindungen oder Mischungen davon aufweisen.

Die Aufgabe wird desweiteren gelöst durch ein Verfahren zur Oberflächenpassivierung von Calciumcarbonat-haltigen Partikel oder Kompositpartikeln dadurch gekennzeichnet, dass die Partikel oder Kompositpartikel mit Behandlungssubstanzen behandelt werden, die ausgewählt sind aus der Gruppe Flusssäure, Oxalsäure und deren wasserlöslichen Salzen und Mischungen davon.

Weitere vorteilhafte Ausformungen der Erfindung sind in den Unteransprüchen angegeben.

### Beschreibung der Erfindung

Alle im Folgenden offenbarten Angaben bezüglich Größe in µm usw., Konzentration in Gew,-% oder Vol.-%, pH-Wert usw. sind so zu verstehen, dass alle Werte, die Im Bereich der dem Fachmann bekannten jeweiligen Messgenauigkeit liegen, mit umfasst sind.
Desweiteren werden im Rahmen dieser Patentanmeldung unter Carbonaten auch die entsprechenden Hydrogencarbonate subsummiert.

Die erfindungsgemäßen oberflächenpassivierten Calciumcarbonat- oder Magnesiumcarbonat-haltigen Partikel weisen an ihrer Oberfläche schwerlösliche Fluorid- oder Oxalatverbindungen oder Mischungen davon auf. Bevorzugt handelt es sich zum einen um Calciumfluorid (CaF₂) bzw. Magnesiumfluorid (MgF₂) oder Strukturen mit Calciumcarbonat und Fluoridionen und mit weiteren Ionen wie z.B. Phosphat oder Sulfat. Zum anderen handelt es sich bevorzugt um Calciumoxalat und Calciumoxalat-Hydrate und ähnliche Verbindungen mit oder ohne Magnesium.
Bevorzugt weisen die erfindungsgemäßen Partikel auf ihrer Oberfläche 0,1 bis 10 Gew.-% insbesondere 0,1 bis 5 Gew.-% Fluorid- oder Oxalatverbindungen gerechnet als Flusssäure bzw. Oxalsäure auf.

Die erfindungsgemäßen Partikel weisen bevorzugt Partikelgrößen von etwa 100 nm bis 100 µm, insbesondere von 100 nm bis 10 µm auf.

Die oberflächenpassivierten Calciumcarbonat- oder Magnesiumcarbonat-haltigen Partikel werden erfindungsgemäß durch, Behandlung der unbehandelten Partikel mit den Behandlungssubstanzen Flusssäure oder deren wasserlöslichen Salzen bzw, mit Oxalsäure oder deren wasserlöslichen Salzen hergestellt. Als Salze der Flusssäure kommen bevorzugt Ammoniumfluorid oder Natriumhydrogenfluorid in Frage. Als Salze der Oxalsäure kommen bevorzugt Ammonium-, Natrium- oder Kaliumoxalat oder Mischungen davon in Frage. Bevorzugt werden 0,1 bis 10 Gew.-% insbesondere 0,1 bis 5 Gew.-% der Behandlungssubstanzen gerechnet als Flusssäure bzw. Oxalsäure eingesetzt.

Die zu behandeinden Partikel werden vorzugsweise in einer wässrigen Suspension dispergiert. Die Behandlungssubstanzen können Bestandteil des Dispergiermediums sein oder später bevorzugt in Form einer Lösung zugegeben werden. In Folge bilden sich auf der Partikeloberfläche schwerlösliche Fluorid- oder Oxalatverbindungen.
In einer besonderen Ausführung der Erfindung wird die Temperatur zur Beschleunigung der Reaktion erhöht.
Abschließend werden die Partikel durch Filtration abgetrennt und gegebenenfalls gewaschen.

Die erfindungsgemäßen Partikel sind insbesondere geeignet für Beschichtungen wie z.B. Innen- und Außendispersionsfarben und weiteren wasserbasierten und lösemittelhaltigen Lacksystemen sowie für Kunststoffanwendungen.

### Beispiele

Die Erfindung wird anhand der folgenden Beispiele genauer beschrieben, ohne dass dadurch der Umfang der Erfindung eingeschränkt werden soll.

### Beispiel 1

Es wurde eine 20 Gew.-%ige Suspension eines Füllstoffs, bestehend aus einer Huntit-Hydromagnesit-Mischung, in reinem Wasser (VE oder dest) hergestellt und anschließend geteilt: Probe 1.1 blieb unbehandelt und Probe 1.2 wurde mit Fluorid behandelt. Oberflächenbehandlung; Die Suspension Probe 1.2 wurde mit 0.5 Gew.-% F in Form von NH₄F-Lösung (100 g/L) unter stetigem Rühren versetzt. Beide Suspensionsproben (Probe 1.1, Probe 1.2) wurden insgesamt 3 Stunden gerührt und anschließend wurde jeweils der Feststoff durch Filtrieren abgetrennt und gewaschen.
Bestimmung der Oberflächenstabilität: Die Feststoffproben 1.1 und 1.2 wurden jeweils in 0,4 g/L KCl-Lösung dispergiert. Von jeder der Proben 1.1 und 1.2 wurden fünfmal je 80 ml in Flaschen abgefüllt und jede der Teilmengen mittels NaOH bzw. HCl auf einen pH-Wert von 7 bzw. 8 bzw. 9 bzw. 10 bzw. 11 eingestellt. Die Flaschen wurden 60 min geschüttelt und anschließend wurde der jeweilige pH-Wert nachjustiert. Nach weiteren 24Stunden wurde der pH-Wert wieder nachjustiert. Anschließend wurden die Flaschen 60 min geschüttelt. Nach weiteren 24 Stunden wurde der pH-Wert kontrolliert. Eine Nachjustierung war nicht erforderlich. Die Proben wurden filtriert und der Anteil der gelösten Mg-Ionen in der flüssigen Phase mittels ICP-OES gemessen (Tab. 1).
Die Fluorid-behandelte Probe (1.2) zeigt im pH-Wert-Bereich bis etwa 10 eine deutlich geringere Magnesiumlöslichkeit gegenüber der unbehandelten Probe (1.1).

| Tabelle 1: | Gelöstes Magnesium | | | | |
|---|---|---|---|---|---|
| pH-Wert | 7 | 8 | 9 | 10 | 11 |
| 1.1 unbehandelt | 689 mg/l | 270 mg/l | 151 mg/l | 63 mg/l | 18 mg/l |
| 1.2 Flourid-behandelt (0,5 Gew.-%) | 441 mg/l | 206 mg/l | 69 mg/l | 39 mg/l | 16 mg/l |

### Beispiel 2

Es wurde eine 20 Gew.-%Ige Suspension eines gefällten Calciumcarbonats (PCC) in reinem Wasser (VE oder dest) hergestellt und anschließend in 4 Teile geteilt: Probe 2.1 wurde mit Phosphat, Probe 2.2 wurde mit Fluorid und Probe 2.3 sowie Probe 2.4 wurden mit Oxalat behandelt.
Oberflächenbehandlung: Die Suspensionsprobe 2.1 wurde mit 1 Gew.-% Phosphat gerechnet als Phosphorsäure In Form von 10%iger Phosphorsäurelösung unter stetigem Rühren versetzt. Die Suspensionsprobe 2.2 wurde mit 0,25 Gew.-% Fluorid gerechnet als Flusssäure in Form von NH₄F-Lösung (100 g/L) unter stetigem Rühren versetzt. Die Suspensionsproben 2.3 und 2.4 wurden mit 1 Gew.-% bzw. 2 Gew.-% Oxalat gerechnet als Oxalsäure in Form von ca. 5%iger Oxalsäurelösung unter stetigem Rühren versetzt. Alle Proben wurden insgesamt 3 Stunden gerührt, und anschließend wurde jeweils der Feststoff durch Filtrieren abgetrennt und gewaschen.
Bestimmung der Oberftächenstabilität: Die Feststoffproben 2.1, 2.2, 2.3 und 2.4 wurden wie in Beispiel 1 jeweils in KCl-Lösung dispergiert, jeweils 5 Teilmengen (80 ml) in Flaschen abgefüllt und jede der Teilmengen auf einen pH-Wert von 7 bzw. 8 bzw. 9 bzw. 10 bzw. 11 eingestellt und anschließend wie in Beispiel 1 geschüttelt und gelagert. Abschließend wurden die Proben filtriert und der Anteil der gelösten Ca-Ionen in der flüssigen Phase mittels ICP-OES gemessen (Tab. 2).
Die Fluorid- (2.2) bzw. Oxalat-behandelten Proben (2.3, 2.4) zeigen eine gleichwertige bis verringerte Calciumlöslichkeit gegenüber der gemäß dem Stand der Technik mit Phosphat behandelten Probe (2.1).

| Tabelle 2: | Gelöstes Calcium | | | | |
|---|---|---|---|---|---|
| pH-Wert | 7 | 8 | 9 | 10 | 11 |
| 2.1 Phosph.-behandelt (1 Gew.-%) | 159 mg/l | 33 mg/l | 11 mg/l | 3 mg/l | 6 mg/l |
| 2.2 Fluorid-behandelt (0,25 Gew.-%) | 143 mg/l | 39 mg/l | 5 mg/l | 2 mg/l | <1 mg/l |
| 2.3 Oxalat-behandelt (1 Gew.-%) | 126 mg/l | 35 mg/l | 10 mg/l | 3 mg/l | 2 mg/l |
| 2.4 Oxalat-behandelt (2 Gew.-%) | 119 mg/l | 31 mg/l | 12 mg/l | 2 mg/l | 2 mg/l |

## Patentansprüche

1. Calciumcarbonat- oder Magnesiumcarbonat-haltige Partikel oder Kompositpartikel **dadurch gekennzeichnet, dass**
die Partikel oder Kompositpartikel auf ihrer Oberfläche schwerlösliche Fluorid- oder Oxalatverbindungen oder Mischungen davon aufweisen.

2. Partikel nach Anspruch 1 **dadurch gekennzeichnet, dass** die Partikel auf der Oberfläche 0,1 bis 10 Gew.-% bevorzugt 0,1 bis 5 Gew.-% Fluorid- oder Oxalatverbindungen gerechnet als Flusssäure bzw. Oxalsäure aufweisen.

3. Partikel nach Anspruch 1 oder 2 **gekennzeichnet durch** eine Partikelgröße von 100 nm bis 100 µm.

4. Verfahren zur Oberflächenpassivierung von Calciumcarbonat- oder Magnesiumcarbonat-haltigen Partikeln oder Kompositpartikeln **dadurch gekennzeichnet, dass**
die Partikel oder Kompositpartikel mit Behandlungssubstanzen behandelt werden, die ausgewählt sind aus der Gruppe Flusssäure, Oxalsäure und deren wasserlöslichen Salzen und Mischungen davon.

5. Verfahren nach Anspruch 4 **dadurch gekennzeichnet, dass** die wasserlöslichen Salze ausgewählt sind aus der Gruppe Ammoniumfluorid, Natriumhydrogenfluorid, Ammoniumoxalat, Natriumoxalat und Kaliumoxalat.

6. Verfahren nach Anspruch 4 oder 5 **dadurch gekennzeichnet, dass** die Partikel mit den Behandlungssubstanzen in einer Menge von 0,1 bis 10 Gew.-% bevorzugt 0,1 bis 5 Gew.-% gerechnet als Flusssäure bzw. Oxalsäure behandelt werden.

7. Verfahren nach einem oder mehreren der Ansprüche 4 bis 6 **dadurch gekennzeichnet, dass**
die zu behandelnden Partikel in einer wässrigen Dispersion mit den Behandlungssubstanzen gemischt werden und sich auf der Partikeloberfläche schwerlösliche Fluorid- oder Oxalatverbindungen oder Mischungen davon bilden.

8. Verfahren nach Anspruch 7 **dadurch gekennzeichnet, dass** die Partikel abschließend aus der Suspension abgetrennt und gegebenenfalls gewaschen werden.

9. Verwendung der Partikel oder Kompositpartikel nach einem der Ansprüche 1 bis 8 in Beschichtungen und Kunststoffanwendungen.
